(19) Europäisches Patentamt
European Patent Office
Office européen des brevets

(11) Publication number: **0 203 361 A2**

(12) # EUROPEAN PATENT APPLICATION

(21) Application number: **86105556.4**

(22) Date of filing: **22.04.86**

(51) Int. Cl.[4]: **C 08 F 299/06**, C 08 F 299/00, C 09 D 3/48, C 08 G 18/68, C 08 G 18/81, C 08 G 18/62, B 29 C 37/00

(30) Priority: **29.04.85 US 728399**
**29.04.85 US 728398**

(43) Date of publication of application: **03.12.86**
**Bulletin 86/49**

(84) Designated Contracting States: **AT BE CH DE FR GB IT LI LU NL SE**

(71) Applicant: **SCM CORPORATION, 925 Euclid Avenue, Cleveland, OH 44115 (US)**

(72) Inventor: **Toman, Perry Alan, 7710 Stone Road, Medina Ohio (US)**

(74) Representative: **Baillie, Iain Cameron et al, c/o Ladas & Parry Isartorplatz 5, D-8000 München 2 (DE)**

(54) **Improved polyester resin gelkote composition.**

(57) Coating compositions suitable for preparing gel coat composites comprise a) hydroxy functional urethane-extended polyesters having molecular weight below 2600 and mole ratios of hydroxyl group to urethane linkage of from 0.5 to 6 which are derived by condensation of fumaric acid and certain nonaromatic polyols and carboxyl acids; or b) acrylate resins having molecular weight up to 3,000 and ethylenically unsaturated functionality attached to the acrylate backbone resin through ester or urethane linkages. Gel coat composites prepared from those coatings using 10 to 50 weight percent aromatic vinyl monomer impart water boil resistance and high gloss retention.

EP 0 203 361 A2

# IMPROVED POLYESTER RESIN GELKOTE COMPOSITION

This invention relates to coating compositions based on unsaturated polyester urethane polymers or low molecular weight unsaturated acrylic resins and gel coats prepared therefrom.

## BACKGROUND OF THE INVENTION

Conventional gelcoat compositions, typically formulated from polyester, acrylate, and urethane type resins and combinations thereof are useful as the exterior paint layer for boats and bathroom fixtures such as shower stalls, bath tub enclosures and the like. A gel coat is a pigmented, filled, and prepromoted resin (usually polyester) which is sprayed with an initiator onto molds from a high pressure spray gun to a film thickness of up to 0.75 mm. The film cures prior to reinforcement with glass fibers and laminating resins. The gel coat should exhibit low viscosity at high shear, should resist sagging, and have a gel time of about 8-12 minutes. For marine and other applications, the products require hydrolytic stability and good weatherability.

The use of unsaturated polyesters in admixture with unsaturated aromatic monomers such as styrene used for the production of crosslinked polymers initiated by peroxide is well known. The unsaturated polyesters are prepared from the condensation of unsaturated acids or acid anhydrides with diols and polyols. The most common unsaturated acid used is either maleic anhydride or fumaric acid. Because ester linkages formed from these materials exhibit poor hydrolysis resistance, the overall film performance of a coating film based on these polymers is somewhat poor. In addition, an aromatic diacid, such as phthalic and isophthalic acid, is generally present and the molecular weight of the polymer is maintained above a number average molecular weight of 2000 to achieve the hydrolysis resistance of the film. However,

the presence of the aromatic nuclei in the polymer backbone and the necessity to add high levels of unsaturated aromatic monomers to obtain sprayable viscosity lead to poor exterior durability in the coated product.

U.S. 4,304,883 (1981) Fujii, Tanaka et al) teaches unsaturated polyester resins for coating metal substrate comprising a vinyl monomer and a dicyclopentadiene modified alkyl. U.S. 4,320,221 teaches the reaction of ethylenically unsaturated monofunctional isocyanate and a difunctional polyol as an anerobic adhesive. Other coatings incorporate conventional isophthalic and phthalic based urethane polyesters having various pendant unsaturation.

Urethanes have been incorporated into useful coatings via various techniques. U.S. 3,928,299 (1975) teaches vinyl solution polymers which contain urethane groups and are crosslinkable by vinyl or vinylidene polymerization. The urethane groups are introduced by reacting hydroxy groups pendant from the acrylate backbone with isocyanaoalkyl acrylates or methacrylates. Urethane modified epoxy ester resins are taught in U.S. 3,478,126.

Unruh and Smith, U.S. 2,887,469 (1959), teach urethane derivatives of hydroxy containing polymers such as ethyl cellulose, cellulose acetate using monohaloalkyl isocyanate and quaternary urethanes formed with tertiary amines. U.S. 2,768,154 teaches polymeric carbalkoxy urethane via the reaction of carbalkoxy isocyanate ($O{=}C{=}N{-}R{-}COOR^1$) with hydroxy functional polymers. U.S. 4,446,175 and U.S. 4,436,885 (1984) teach isocyanate-functional acrylic solvent copolymers of 2-isocyanotoethyl (meth)acrylate with other acrylate monomers in the presence of a mercaptan chain-transfer agent.

U.S. 4,320,331 (1982) teaches the reaction of ethylenically unsaturated monofunctional isocyanate and a difunctional polyol as an anerobic adhesive.

U.S. 4,287,323 (1981) teaches additional polymerizable polyethers having pendant ethylenically unsaturated urethane groups as useful flooring materials. Such urethane polyethers are prepared by reacting a polyether polyol (hydroxy terminated polypropylene glycol) with an isocyanatoalkyl (meth)acrylate.

U.S. 4,273,690 (1981) teaches a graft copolymer binder for coatings having an acrylic backbone and alkyl resin chains attached to the backbone by an isocyanate group reactive with the hydroxyl or carboxylic group of the alkyd resin.

Others have attempted to reduce gel coat problems such as blistering or extended water exposure by increasing the film thickness of the gel coat (See Denoms et al, Annual Conference, Reinforced Plastics/Composites Institute, The Society of the Plastics Industry, Inc., February 7-11, 1983).

Vinyl esters based on aromatic polyepoxide resin reacted with unsaturated monocarboxylic acid and other moieties are exemplified in U.S. Patents 3,367,992; 3,066,112; and 3,179,623. The presence of the aromatic nuclei and the necessity of adding high levels of unsaturated aromatic monomers to obtain a sprayable viscosity leads to unacceptable exterior durability while those based on aliphatic polyepoxides show poor hydrolysis resistance.

The above deficiencies have been largely overcome by the gel coats of the present invention based on specific hydroxy functional urethane extended polyester oligomers. The improved coatings provide gel coats with low viscosity and excellent hydrolytic and weathering stability.

BRIEF SUMMARY OF THE INVENTION

One major aspect of the invention relates to a coating composition comprising a hydroxyl functional urethane-extended unsaturated polyester free of isocyanate functionality and having a free hydroxyl to urethane mole ration of from 0.5 to about 6.0; wherein said urethane extended polyester is the reaction product of a non-aromatic hydroxylated unsaturated polyester oligomer number average molecular weight of from about 500 to 2000 and a non-aromatic diisocyanate, polyisocyanate or isocyanate terminated prepolymer; said polyester oligomer drived by condensation polymerization of fumaric acid or a fumaric acid precursor with a polyol comprising a major portion of neopentyl glycol, one or more non-aromatic dicarboxylic acids and optionally one or more non-aromatic monocarboxylic acids.

Another aspect relates to gel coat composites comprising 50 to 90 weight percent hydroxy functional urethane polyester having a molecular weight of from about 1000 to about 3000 and a free hydroxyl to urethane linkage mole ratio of from about 0.5 to 6.0; and 10 to 50 weight percent aromatic vinylic monomer, wherein said unsaturated polyester is derived from a non-aromatic unsaturated polyester oligomer.

A second major aspect relates to improved coating compositions which incorporate resins having an acrylate backbone and pendant carbon-to-carbon bond unsaturation, said resins derived from the reaction product of:

1) an acrylate polymer having pendant epoxide functionality attached to the polymer chain through an ester or ether linkage with an unsaturated carboxylic acid, preferably acrylic acid or methacrylic acid; or

2) an acrylate polymer having pendant hydroxyl group functionality with a reactive isocyanate having at least one carbon-to-carbon bond unsaturation

wherein said resin is substantially free of reactive epoxy and isocyanate functionality and contains from 1 to about 6 pendant carbon-to-carbon bond unsaturation per polymer resin unit.

A further aspect relates to a substrate, particularly boats and sanitary ware, formulated from the above gel coats and a reduced amount of about less than 30 weight percent of styrene monomer, wherein such coated substrate exhibits improved hydrolytic and weathering properties.

DETAILED DESCRIPTION OF THE INVENTION

The improved urethane-extended unsaturated polyester oligomers and gel coats comprise the oligomer and up to 30 weight percent (total components) of aromatic vinylidine compound such as styrene capable of hardening the composition by double bond polymerization with the unsaturated polyester.

The urethane oligomers represent the reaction product of a hydroxyl functional unsaturated polyester and a non-aromatic diisocyanate. The polyester is the condensation of one or more polyols, one or more dicarboxylic acids, optionally one or more monocarboxylic acids and possesses acid numbers of from 5 to about 25 and hydroxyl functionality in 0.5 to 2.0 mole excess of that required for complete reaction of the isocyanate functionality to form the urethane extended polyester.

The preferred polyol is neopentyl glycol which comprises at least 40 percent of the total glycol content required for the preparation of polyester. When desired for imparting particular properties, other glycols such as, for example, hydrogenated

bisphenol A, cyclohexanedimethanol, hexanediols and octanediol-1,8,trimethylol propane, trimethylol ethane, and pentaerthritol may be used in amounts up to about 60 weight percent basis total glycol and preferably in amounts of 20 to 40 weight percent basis total glycol.

Both the monocarboxylic acids and the dicarboxylic acids useful in preparing the unsaturated polyesters are required to be non-aromatic acids. At least a major portion (moles) of the diacid used to prepare the unsaturated polyester must be fumaric acid or fumaric acid precursor components, i.e. maleic anhydride, maleic acid. When maleic acid and/or maleic anhydride is used, it is preferred to use a catalyst that will enhance the conversion to fumaric acid. The balance of the carboxylic acid can be supplied by azelaic acid, adipic acid, dodecanedioc acid and the like. Optionally one or more non-aromatic dicarboxylic acids including lauric acid, stearic acid and the like can make up to 35 weight percent of the acid for the development of particular coating properties. Other such acids include 2-ethylhexanoic acid, palmitic acid, myristic acid; caprylic acid, capric acid, pelargonic acid, heptanoic acid, and isostearic acid.

Preferred unsaturated polyester oligomers will exhibit relatively low free-acid functionality (acid number 5 to 25) and sufficient hydroxyl functionality in excess of that required to react with the isocyanate groups to form urethane extended polyester oligomers. The polyester oligomers will have molecular weight (number average) in the range of from 500 to above 2000 and preferably about 1000. The urethane polyesters will be formulated to exhibit number average molecular weights below 3000 and preferably not to exceed 2200 depending in each case on the intended end use of the particular coating.

Useful non-aromatic diisocyanates for the formation of urethane extended polyesters include isophorone diisocyanate, hexamethylene diisocyanate, tetramethylene diisocyanate, 2,2,4-trimethylhexane diisocyanate, 2,4,4-trimethylhexane diisocyanate, and 4,4-dichclohexylmenthane diisocyanate. Isophorone diisocyanate is the preferred reactant. Isocyanate terminated prepolymer may be used in partial or complete substitution for the diisocyanate monomer. Useful prepolymers include the reaction product of about 2.0 moles of a diisocyanate with about 1.0 to 1.5 moles of an aliphatic diol or polyol--the reaction product of isophorone diisocyanate with neopentyl glycol being a preferred prepolymer.

The coating compositions and gel coat composites based on acrylic polymers have pendant curable vinyl or vinylic functionality attached to the acrylic polymer chain via ester and/or urethane linkages.

The use of unsaturated polymers and particularly polyesters prepared from unsaturated dicarboxylic acids is well known for coating purposes. While such esters contribute to the cure reaction, it is believed that such materials suffer from slow dry, improper film cure and poor hydrolysis resistance. This result is believed to result in part from internal burying of the carbon-to-carbon unsaturated cure linkages within the polymer molecule. One advantage of the instant invention is that it allows post-polymerization introduction of carbon-to-carbon unsaturation as part of the polymer, both end terminated and pendant to the polymer chain. Thus the cure sites are not embedded in the center of the polymer and remain available for cure reactivity via vinyl type polymerization with aromatic vinyl compounds such as styrene.

The instant polymers may be generically depicted by an acrylate chain having the following formula:

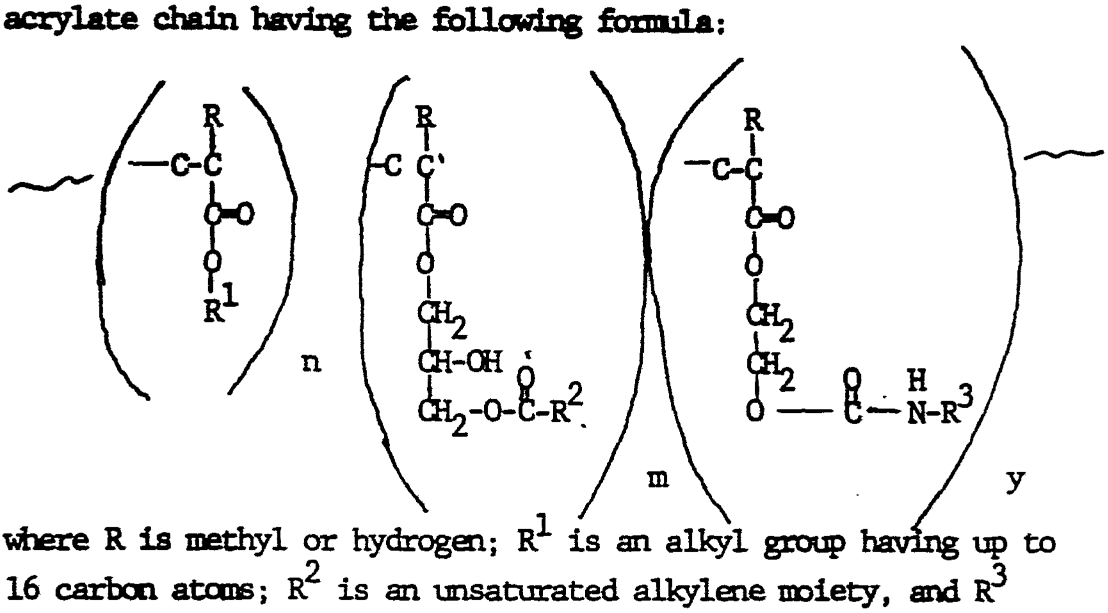

where R is methyl or hydrogen; $R^1$ is an alkyl group having up to 16 carbon atoms; $R^2$ is an unsaturated alkylene moiety, and $R^3$ alkyl or aralkyl residue having ethylenic unsaturated functionalith derived from certain reactive isocyanates; and n, m, and y independently represent integers from 0 to 10 whose total is from about 5 to 16 and preferably about 10 such units; with the proviso that m and y cannot be equal to zero at the same time.

The acrylate resins of the instant invention comprises an acrylate backbone resin having pendant carbon-to-carbon bond unsaturation being the reaction product in one instance of an acrylate resin having multiple epoxide functionality which is further reacted with an unsaturated carboxylic acid such as, for example, acrylic acid or methacrylic acid. The acrylate resin having pendant epoxide functionality adapted for further reaction with the unsaturated acid can be synthesized in known fashion by the polymerization or copolymerization of acrylate and/or methacrylate esters with glycidyl acrylates preferably glycidyl methacrylate. Another approach would be to incorporate other

epoxy monomers copolymerizable with the acrylate esters. Thus one may substitute, in whole or in part, alpha,beta,-unsaturated ether in place of the glycidyl acrylate monomer. These ethers include, for example, allyl-glycidyl ether, ethylene glycol mono-alkylmonoglycidyl ether, diethylene glycol-monoallyl monoglycidyl ether, glycerol diallyl-monoglycidyl ether and trimethylolpropane diallyl-monoglycidyl ether, and the like. Of the above types, allyl-glycidyl ether is preferred and glycidyl methacrylate is most preferred.

Referring next to the acrylate resins having functional hydroxy groups attached to the acrylate (vinyl) chain. These are synthesized by copolymerizing acrylic or methacrylate esters with hydroxyalkyl acrylates or methacrylates. Hydroxy ethyl methacrylate and hydroxypropyl methacrylate are the preferred monomers in this copolymerization. Following the polymerization the hydroxyl-bearing acrylates are next reacted with an isocyanate compound having carbon-to-carbon unsaturated sites. Such multifunctional isocyanates include for example isocyanatoalkyl acrylate and methacrylate esters and reactive isocyanates where the double bond carbon unsaturation is not part of an acrylate or methacrylate monomer. The latter include, for example, isopropenyl-substituted benzyl isocyanates, and particularly meta-isopropenyl-alpha,alpha-dimethylbenzylisocyanate.

The level of glycidyl monomer can be varied quite widely over the range of from about 20 weight percent to as high as 90 weight percent basis total monomer used in forming the acrylate polymer having multiple epoxy functionality. Preferred compositions are those having up to 50 weight percent, the remainder being made up of alkyl esters, hydroxy alkyl esters, and amino alkyl esters of acrylic and methacrylic acid. The alkyl esters

can be used at concentration from 10 to 90 weight percent; the hydroxyalkyl esters at levels of 5-30 percent and the amino alkyl resins (i.e. dimethylaminoethyl methacrylate) at about 0.5 to 15 weight percent depending on the type of coating desired and the indicated end use.

The unsaturated acid used in combination with acrylic resin having reactive epoxide functionality is preferably used in stoichiometry quantity to react with most of the epoxy functionality. The acid should not be used in excess. The reaction is continued until the acid number is negligible or at least below 2. Similarly the unsaturated isocyanate is used in amounts relative to reactive hydrogen content of the acrylic resin to avoid any excess unreacted isocyanate functionality. Generally the isocyanate will be added in molar ratio versus hydroxyl functionality of 0.25 to 0.8 mole. It is important to have an excess of hydroxyl functionality remaining in the acrylate resin.

Although the functional acrylates described above are separately illustrated for simplicity, it is contemplated that acrylate resins can contain both types of reactive ethylenic functionality. Thus an addition polymer can be made by reacting one or more of each monomer types including alkyl acrylates, hydroxyalkyl acrylates, and glycidyl monomers. These intermediate resins having both hydroxyl and epoxy functionality can then be further reacted with the chain extender monomers such as the unsaturated carboxylic acids and the unsaturated urethane precursor monomers. When so combined, it is preferred to sequentially add the individual extender isocyanates first, then add the extender carboxylic acids. Alternatively, both carboxylic acid and isocyanate extenders can be reacted with an intermediate resin containing only epoxy functionality. Reaction with the

unsaturated acid provides hydroxyl group functionality adapted for further reaction with isocyanate. For the optimization of certain coating properties, depending on the end use, it may be preferred to prepare the individual types separately and simply mix them together in the paint formulation.

Useful acrylate or methacrylate esters are alkyl esters, hydroxyalkyl esters, glycidyl esters, and aminoalkyl esters. Illustrative acrylate esters include methyl acrylate, methyl methacrylate, ethyl acrylate, ethyl methacrylate, propyl acrylate, propyl methacrylate, n-butyl acrylate, isobutyl methacrylate, 2-ethylhexyl acrylate, 2-ethylhexyl methacrylate, lauryl acrylate, stearyl acrylate, nonyl methacrylate. Illustrative hydroxyalkyl esters include hydroxyethyl acrylate, hydroxymethyl acrylate, hydroxybutyl acrylate, hydroxyoctyl acrylate, and their methacrylate counterparts.

Illustrative unsaturated carboxylic acids include methacrylic acid, acrylic acid, butanedioc acid, maleic acid, fumaric acid and their precursor anhydrides. Illustrative monomers useful in preparing epoxy functional acrylate or methacrylate resins include glycidyl methacrylate, glycidyl acrylate, vinyl epoxide, allyl glycidyl ether, the reaction product of one mole bisphenol A, one mole of epichlorohydrin, and one mole allyl chloride. In addition to the above monomer, useful acrylate polymers can incorporate about 0-15 percent and preferably 0.5-5.0 weight percent amino alkyl acrylate and methacrylate esters. Preferred monomers of this type are the dialkylaminoalkyl esters such as dimethylaminoethyl methacrylate and diethylaminopropyl methacrylate.

In the formation of gel coats, the extended unsaturated polyester or acrylic polymer is mixed at weight percentages of

from about 65 to 85 with one or more ethylenically unsaturated aromatic present at 35 to 15 weight percent (basis total composition). For this purpose, the ethylenical unsaturation is adapted to participate in the gel/cure crosslinking reaction with at least a portion of the fumaric unsaturation present in the polyester chain. Styrene is the preferred monomer for this use although other suitable monomers such as p-methyl styrene, methyl methacrylate, dicyclopentadienyl methacrylate, t-butyl styrene, divinylbenzene, and vinyltoluene can be substituted in whole or in part for the styrene monomer.

The gel coats can be clears or can be formulated as pigmented gel coats using the common additives and pigments known to the art. These include, for example, talcs, clays, pigments, silicas, promoters, ultraviolet stabilizers, and thickeners.

Although not wishing to be bound thereby, it is believed that the desirable properties of the instant coatings are achieved by a suitable combination of soft segments provided by the polyester portion and hard segments provided by the urethane portion. It is also believed that the reduction of viscosity in the coating allows gel coat formulations at lower aromatic vinyl components than heretofore allowed in conventional polyester coatings.

TEST PANEL PREPARATION

Lupersol DDM-9 (1.2%) is added to the gel coat paint and stirred with a spatula for 30 minutes. Drawdown on a waxed and buffed flat tempered glass plate using a 7/16 x 16" drawndown bar. After curing for 3-4 hours, 3 plys of fiberglass mat are applied with resin (30% mat/70% resin). Lupersol DDM-9 (1.2%) catalyst is added. Allow 40-60 minutes after the gel time of the laminating resin for cure. Remove the laminate from the mold and cut into test strips (film thickness 18-22 mls.).

BOILING WATER RESISTANCE

Coated test panels (4-1/4 x 4-1/4) are connected to the boiling water test tank (ANSI 2-124.1) and exposed to boiling water for 100+ hours. The exposed panels are rated on a scale of 0-5 for blisters, color change, change in fiber prominence, cracks and loss of visible gloss with 0 = no change and 5 = maximum change.

QV WEATHERING

Coated test panels are subjected to the weathering test as per ANSI/ASTM G 53-77 rest procedure using the standard cycle of 4 hours condensation at 50°C followed by 8 hours UV exposure at 70°C. Test panels are inspected at intervals of 150 hours.

Although the following examples are representative of the invention, they should not be read in a restrictive manner. All parts and percentages are by weight and all temperatures are expressed in degrees Centigrade unless otherwise specified.

## A. Polyester Urethanes

### EXAMPLE I (COMPARATIVE)

### Preparation of a Conventional Isophthalic Acid Unsaturated Polyester Resin

In a reactor provided with a stirrer, a thermometer, a water separating column fitted with a reflux condenser, and a nitrogen inlet is added the following ingredients:

| Component | Grams |
|---|---|
| Neopentyl Glycol | 2633 |
| Propylene Glycol | 499 |
| Adipic Acid | 219 |
| Isophthalic Acid | 2240 |
| Maleic Anhydride | 1467 |
| Piperidine | 8.8 |

The charged mixture is heated to reflux and a total of 750 parts of water distilled off. The reaction mixture is then held at 220°C until an acid number of 18-28 is obtained.

The reaction mixture is then cooled to less than 140°C and the following ingredients are added:

| Component | Grams |
|---|---|
| Methoxyhydroquinone | 0.9 |
| Styrene | 2932 |
| Copper Napthenate | 1.0 |

The resulting solution has a Gardner-Holt bubble type viscosity of $Z\text{-}Z_1$ at 67.5% non-volatile by weight.

## EXAMPLE 2 (COMPARATIVE)

### Preparation of a Conventional Gel Coat Coating

A gel coat coatings composition is then prepared by blending the following ingredients:

| Component | Grams |
|---|---|
| Resin solution from comparative Example 1 | 55.45 |
| Potassium Hex-Cem* | 0.25 |
| "Lo-Vel" 27* | 3.50 |
| "Mistron" Monomix* | 10.00 |
| Titanium Dioxide | 11.00 |
| "Chem-All" 12% Cobalt* | 0.20 |
| Styrene | 19.40 |
| Ethylene Glycol | 0.20 |

*Potassium Hex-Cem and Chem-All are trademarks of Mooney Chemicals; Lo-Vel is a trademark of PPG Industries; Mistron is a trademark of Cyprus Industrial Minerals Co.

The resulting paint has a Brookfield viscosity of approximately 300 cps at 77°F and a thixotropic index of 5-6. The paint contains 37% styrene by weight and 13.4% by weight of a polymerized aromatic diacid.

The weathering characteristics as measured by QUV are listed below.

| Hours | $\Delta E$ | % Gloss Retention |
|---|---|---|
| 150 | 8.68 | 75.0 |
| 300 | 8.66 | 3.6 |

A panel was immersed in boiling water for 100 hours and exhibited some loss of gloss and slight blister formation.

EXAMPLE 3

Preparation of a Non-Aromatic Polyester-Urethane Polymer

In a reactor fitted with a stirrer, a thermometer, a water separating column, and a nitrogen inlet is added the following ingredients:

| Component | Grams |
|---|---|
| Neopentyl Glycol | 1550 |
| Fumaric Acid | 719 |
| Azelaic Acid | 818 |

The charged mixture is heated to reflux and a total of 373 grams of water distilled off. The reaction mixture is then held at 220°C until an acid number of less than 7 is achieved.

The reaction mixture is cooled to 120°C and 0.8 grams of dibutyl tin dilaurate added to the mixture followed by dropwise addition of 413 grams isophorone diisocyanate. After all the diisocyanate is added, the reaction mixture is maintained at 120°C until no free isocyanate groups are detected by infra-red spectroscopy or by titration.

Then the mixture is cooled to 90-100°C and 0.6 grams hydroquinone followed by 928 grams of styrene are added. The resulting solution has a Gardner-Holt bubble tube viscosity of $Z_1$-$Z_2$ at 75% non-volatile by weight.

## EXAMPLE 4

### Preparation of a Coating Based on the Non-Aromatic Polyester-Urethane Polymer

A gel coat coatings composition is prepared by blending the following ingredients:

| Component | Weight Percent |
|---|---|
| Polyester-Urethane from Example 3 | 64.51 |
| Potassium Hex-Cem | 0.25 |
| "Lo-Vel" 27 | 1.50 |
| "Aerosil"* 200 | 2.50 |
| "Mistron" Monomix | 10.00 |
| Titanium Dioxide | 11.00 |
| "Chem-All" 12% Cobalt | 0.30 |
| Styrene | 9.74 |
| Ethylene Glycol | 0.20 |

*Aerosil is a trademark of Degussa, Inc.

The resulting paint has a viscosity of 100 cps and a thixotropic index of 5-6. The paint contains 26% styrene.

The weathering characteristics as measured by QUV are listed below.

| Hours | ΔE | % Gloss Retention |
|---|---|---|
| 150 | 2.00 | 96.6 |
| 300 | 2.01 | 94.4 |

A panel was immersed in boiling water for 100 hours and its performance judged as equal to the coating made from comparative Example 2.

EXAMPLE 5

Using the procedure of Example 3, a polyester-urethane oligomer was prepared from the following components:

| Component | Grams |
|---|---|
| Maleic Anhydride | 786 |
| Neopentyl Glycol | 990 |
| Hydrogenated bisphenol A | 421 |
| Lauric Acid | 267 |
| Azelaic Acid | 133 |
| Piperidine | 2.7 |

The polyester was processed at a lower temperature, namely 180-190°C until an acid number of 25-30 was attained. Thereafter the polyester was extended with isophorone diisocyanate (324 grams) using dibutyltin dilaurate catalyst and reaction continued until no free isocyanate groups were detected. After dilution with styrene, the resulting solution exhibited a Gardner-Holt bubble tube viscosity of $Z_4$-$Z_5$ at 75% non-volatile by weight.

The paint was formulated as in Example 4 and evaluated for weathering characteristics (QUV) and for water boil resistance. The weathering characteristics as measured by QUV are listed below.

| Hours | $\Delta$E | % Gloss Retention |
|---|---|---|
| 150 | 1.19 | 98.1 |
| 300 | 1.92 | 93.2 |

The coating of Example 5 exhibited gloss retention, non-yellowing ($\Delta$E) properties, and water boil performance superior to those of Examples 2 and 4.

EXAMPLE 6

The relationship of theoretical hydroxyl number of the urethane polyester to water boil resistance was evaluated using the produce of Examples 2, 4, and 5 and varying the total hydroxyl functionality content by using larger amount of lauric acid in the polyester preparation as shown in the following table:

| Calc. Hydroxyl Number | % Lauric Acid | Total Water Boil Score* |
|---|---|---|
| 80 | 5.4 | 6-7 |
| 40 | 9.2 | 5 |
| 20 | 14.3 | 6 |

*Based on a scale of 0-25 where 0 equals no change and 25 signifies total failure; total score is obtained by adding individual ratings (0-5) for blisters, color change, fiber prominence, cracks and loss of gloss.

B. Unsaturated Arcylic Resins

EXAMPLE 1B

Preparation of acrylic resin with glycidyl-monocarboxlic acid functionalization.

An acrylic resin solution is prepared by charging the following constituents into a polymerization vessel equipped with a thermometer, a stirrer, a reflux condenser and an addition funnel.

| Portion 1 | Parts by Weight | Grams |
|---|---|---|
| Xylene | 50.0 | 960 |
| Portion 2 | | |
| Butyl Acrylate | 54.0 | 1036 |
| Glycidyl Methacrylate | 46.0 | 884 |
| Azobisisobutyronitrile | 6.1 | 117 |
| Portion 3 | | |
| Azobisisobutyronitrile | 0.2 | 4 |
| Portion 4 | | |
| Benzoquinone | 0.15 | 0.3 |
| 2,4,6 Tri(dimethylamino-methyl) Phenol | 0.1 | 2 |
| Portion 5 | | |
| Methacrylic Acid | 19.53 | 375 |
| Portion 6 | | |
| Styrene | 20.78 | 399 |

Portion 1 is added to the vessel and heated to its reflux temperature (135-140$^{o}$C). Portion 2 is premixed and added over 2.5-3.5 hours while maintaining the reaction mixture at its reflux temperature. After all of portion 2 has been added, the reaction mixture is held for 15 minutes. Then portion 3 is added. The mixture is then held at reflux for an additional 30 minutes. The reaction vessel is then fitted with a downward condenser and

a vacuum is pulled to remove the solvent. The reaction mixture is then cooled to 120°C and portion 4 is added. Next portion 5 is added dropwise over 1-2 hours after which the reaction mixture is held at 120°C until the reaction is completed as determined by acid number titration . The mixture is then cooled to 90-100°C and portion 6 is added.

EXAMPLE 2B

Using the product of Example 1B, a white gel coat was prepared by blending together the following ingredients:

| Component | Weight Percent |
|---|---|
| Acrylic Resin Solution from Example 1 | 58.8 |
| Potassium Hex-Cem* | 0.25 |
| Crayvallac | 1.75 |
| "Aerosil" 200 | 0.5 |
| "Mistron" Monomix | 10.0 |
| Titanium Dioxide | 11.0 |
| "Cem-All"* 12% Cobalt | 0.3 |
| Styrene | 17.2 |
| Ethylene Glycol | 0.2 |
| Amber Wax | 0.044 |

*Potassium Hex-Cem and Cem-All are trademarks of Mooney Chemicals; Lo-Vel is a trademark of PPG Industries; Mistron is a trademark of Cyprus Industrial Minerals Co.; Aerosil is a trademark of Degussa, Inc.

continued.........

The coating was applied onto an inverse mold by airless spray, pot gun spray or by brushing to deposit a film layer. After standing at room temperature overnight, the panels were evaluated using the boiling water test and the QUV accelerated weathering test. The results, compared with a conventional unsaturated polyester, are shown in Table I. The panel immersed in boiling water for 100 hours exhibited only slight blistering and slight loss of gloss. Using the QUV weathering test, there was no loss of gloss at 150 hours and the panel retained 60.5 percent gloss at 300 hours.

TABLE IB

| EXAMPLE NO. | DRY FILM THICKNESS (MIL) | BOILING WATER TEST HRS. | BOILING WATER TEST BLISTERING | BOILING WATER TEST LOSS OF GLOSS | QUV WEATHERING HRS. | QUV WEATHERING $\Delta E$ | QUV WEATHERING % GLOSS RETENTION |
|---|---|---|---|---|---|---|---|
| 2B | 20 | 100 | Slight | Slight | 150 | 0.85 | 100 |
| | | | | | 300 | 2.99 | 60.5 |
| 4B | 20 | 100 | Slight | None | 150 | 2.34 | 88.4 |
| | | | | | 300 | 3.13 | 90.5 |
| CONTROL* | 20 | 100 | Moderate | Slight | 150 | 8.68 | 75.0 |
| | | | | | 300 | 8.66 | 3.6 |

*Conventional unsaturated polyester gel coat.

EXAMPLE 3B

Preparation of an acrylic resin based on hydroxy-isocyanato methacrylate functionalization. An acrylic polymer solution is prepared according to the procedure of Example 1 with the following components:

| | Parts by Weight | Grams |
|---|---|---|
| Portion 1 | | |
| Xylene | 33.3 | 194 |
| Portion 2 | | |
| Butyl Acrylate | 70 | 408 |
| 2-Hydroxyethyl Acrylate | 30 | 175 |
| Azobisisobutyronitrile | 4.4 | 26 |
| Portion 3 | | |
| Azobisisobutyronitrile | 0.22 | 1.3 |
| Portion 4 | | |
| Dibutyl Tin Dilaurate | 0.25 | 1.5 |
| Ionol | 0.024 | 0.14 |
| Portion 5 | | |
| Isocyanatoethyl Methacrylate | 40.125 | 234 |
| Portion 6 | | |
| Styrene | 36.13 | 211 |

Portion 5 is added at 80°C.

EXAMPLE 4B

A white gel coat paint is prepared from the resin of Example 3B by blending the following ingredients:

| Component | Weight Percent |
|---|---|
| Acrylic Resin from Example 3 | 61.88 |
| Potassium Hex-Cem | 0.25 |
| "Aerosil" 200 | 1.5 |
| "Lo-Vel" 27 | 2.5 |
| "Mistron" Monomix | 10.0 |
| Titanium Dioxide | 11.0 |
| "Cem-All" 12% Cobalt | 0.3 |
| Styrene | 12.37 |
| Ethylene Glycol | 0.2 |

The results of the boiling water and accelerated weathering tests are shown in Table I. There was virtually no loss in gloss and only slight blistering after the panel was immersed in boiling water for 100 hours. In the weathering test (QUV) approximately 90 percent of the gloss was retained at 300 hours.

EXAMPLE 5B

If the procedure of Example 3B is repeated using meta-isopropenyl-alpha,alpha-dimethylbenzylisocyanate in place of isocyanatoethyl methacrylate, an acrylic resin product will be produced that has the requisite carbon-to-carbon bond unsaturation required to react with styrene in gel coat composites but advantageously will exhibit improved water boil and weathering characteristics due to the lower carboxylic ester content.

C L A I M S

1. A gel coat composition comprising

1) 50 to 90 weight percent of a polymeric material selected from

a) a hydroxy functional urethane-extended unsaturated polyester free of isocyanate functionality and having a free hydroxyl to urethane mole ratio of from about 0.5 to 6; wherein said urethane-extended polyester is the reaction product of a non-aromatic hydroxylated unsaturated polyester, having a number average molecular weight of from about 500 to 2,000 derived by condensation polymerization of fumaric acid or a fumaric acid precursor with one or more non-aromatic glycol, one or more non-aromatic dicarboxylic acids, optionally one or more non-aromatic monocarboxylic acids, with a non-aromatic diisocyanate, polyisocyanate, or isocyanate functional prepolymer; and

b) an acrylate backbone resin having multiple carbon-to-carbon bond unsaturation selected from one or more of the following:

i) an epoxy functional acrylate or methacrylate polymer having multiple epoxide functionality attached to the polymer chain through an ester or ether linkage reacted with an unsaturated carboxylic acid selected from the group consisting of acrylic acid and methacrylic acid or mixtures thereof; or

ii) hydroxy functional acrylate or methacrylate polymer having multiple hydroxyl group functionality reacted with a reactive organoisocyanate adapted for reaction with said hydroxyl groups to provide one or more urethane bonds per molecule and wherein said isocyanate has at least one carbon-to-carbon bond unsaturation per mole;

and wherein said acrylate resin is substantially free of reactive epoxy and isocyanate functionality; and

2) 10 to 50 weight percent of a copolymerizable vinyl monomer.

DKT. 10149/50

2. A gel coat composition according to claim 1, wherein the vinyl monomer is an aromatic vinylic monomer present in an amount of less than 30 weight percent basis combined total weights of aromatic vinyl monomer plus polymeric material.

3. A gel coat composition according to claim 2, wherein said vinylic monomer is styrene.

4. A gel coat composition according to any one of the preceding claims, wherein said polymeric material is a urethane-extended polyester having a molecular weight of 1,000 to 3,000.

5. A gel coat composition according to any one of the preceding claims, wherein said polymeric material is a urethane-extended polyester wherein the non-aromatic dicarboxylic acid is selected from the group consisting of azelaic acid, adipic acid, and dodecanedioc acid, said diisocyanate is isophorone diisocyanate, and said non-aromatic glycol comprises at least 40 weight percent neopentyl glycol and wherein the unsaturated polyester polymerization is effected in the presence of at least one saturated monocarboxylic acid selected from the group consisting of lauric acid, stearic acid, 2-ethylhexanoic acid, and pelargonic acid and optionally in the presence of bisphenol A.

6. A gel coat composition according to claim 5, wherein dicarboxylic acid is azelaic acid, the saturated monocarboxylic acid is lauric acid, and the non-aromatic glycol comprises neopentyl glycol and hydrogenated bisphenol A.

7. A gel coat composition according to any one of claims 1-3, wherein said polymeric material is an epoxy functional acrylate resin derived from the free radical polymerization of one or more methacrylate or acrylate esters and glycidyl methacrylate, ally-glycidyl ether or a mixture thereof, is further reacted with methacrylic acid.

8. A gel coat composition according to any one of claims 1-3, wherein said polymeric resin is a hydroxyfunctional which is derived from the free radical polymerization of one or more acrylate or methacrylate esters

and is further reacted with an unsaturated isocyanate selected from the group consisting of isocyanatoalkyl methacrylate and an isopropenylbenzyl isocyanate, preferably meta-isopropenyl-alpha,alpha-dimethylbenzyl isocyanate.

9. A polymeric material suitable for use in the gel coat composition of claim 1, which comprises a hydroxy functional urethane-extended unsaturated polyester free of isocyanate functionality and having a free hydroxyl to urethane mole ratio of from about 0.5 to 6; wherein said urethane-extended polyester is the reaction product of a non-aromatic hydroxylated unsaturated polyester, having a number average molecular weight of from about 500 to 2,000 derived by condensation polymerization of fumaric acid or a fumaric acid precursor with one or more non-aromatic glycol, one or more non-aromatic dicarboxylic acids, optionally one or more non-aromatic monocarboxylic acids, with a non-aromatic diisocyanate, polyisocyanate, or isocyanate functional prepolymer.

10. A polymeric material according to claim 9, derived from the free radical polymerization of one or more methacrylate or acrylate esters and glycidyl methacrylate, ally-glycidyl ether or a mixture thereof, is further reacted with methacrylic acid.

11. A polymeric material suitable for use in a gel coat composition according to claim 1, comprising

i) an epoxy functional acrylate or methacrylate polymer having multiple epoxide functionality attached to the polymer chain through an ester or ether linkage reacted with an unsaturated carboxylic acid selected from the group consisting of acrylic acid and methacrylic acid or mixtures thereof.

12. A polymeric material according to claim 11, which is derived from the free radical polymerization of one or more methacrylate or acrylate esters and glycidyl methacrylate, ally-glycidyl ether or a mixture thereof, is further reacted with methacrylic acid.

13. A polymeric material suitable for use in a gel coat composition according to claim 1, comprising

ii) hydroxy functional acrylate or methacrylate polymer having multiple hydroxyl group functionality reacted with a reactive organoisocyanate adapted for reaction with said hydroxyl groups to provide one or more urethane bonds per molecule and wherein said isocyanate has at least one carbon-to-carbon bond unsaturation per mole;

and wherein said acrylate resin is substantially free of reactive epoxy and isocyanate functionality.

14. A polymeric material according to claim 13, which is derived from the free radical polymerization of one or more acrylate or methacrylate esters and is further reacted with an unsaturated isocyanate selected from the group consisting of isocyanatoalkyl methacrylate and an isopropenylbenzyl isocyanate, preferably meta-isopropenyl-alpha,alpha-dimethylbenzyl isocyanate.

15. A polymeric material according to claim 13, wherein acrylate polymer, a solution copolymer comprising butyl acrylate and glycidyl methacrylate, which is further reacted with methacrylic acid to provide a copolymer having from 0.5 to 9.0 units of hydroxyl functionality per unit of pendant unsaturation.